# EUROPEAN PATENT SPECIFICATION

(11) **EP 3 929 648 B1**
(45) Date of publication and mention of the grant of the patent: **22.05.2024**
(21) Application number: 20182549.4
(22) Date of filing: 26.06.2020
(51) Int. Cl.: G02B 26/06, G02B 21/36

(54) **METHOD OF CONTROLLING CASCADED PHASE MODULATORS**
VERFAHREN ZUR STEUERUNG VON KASKADIERTEN PHASENMODULATOREN
PROCÉDÉ DE COMMANDE DE MODULATEURS DE PHASE EN CASCADE

(43) Date of publication of application: 29.12.2021
(73) Proprietor: Albert-Ludwigs-Universität Freiburg, 79098 Freiburg (DE)
(72) Inventor: BANERJEE, Kaustubh, 73430 Aalen (DE); ATAMAN, Caglar, 79100 Freiburg (DE); RAJAEIPOUR, Pouya, 79106 Freiburg (DE); ZAPPE, Hans, 79114 Freiburg (DE); WEBER, Stefan, 8400 Winterthur (CH)
(74) Representative: Mertzlufft-Paufler, Cornelius

(56) References cited:
- DE-A1-102018 110 083
- US-A1- 2017 302 498

## Description

The present disclosure relates to a method for operating a multitude (i.e. at least two) of serially cascaded wavefront modulators, which are jointly generating an output wavefront Zₒ that is modeled as a superposition of N fundamental orthonormal modes, and wherein each of the wavefront modulators is configured to modulate a number of mᵢ of the N modes of the output wavefront Zₒ. The present disclosure further relates to an accompanying control system and an imaging system that is making use of the method.

The method is intended to use multiple wavefront modulators to form an adaptive optics (AO) system. AO is a proven technology for real-time aberration correction to achieve diffraction-limited images within a wide variety of optical imaging systems such as ground-based telescopes, different types of microscopes, and ophthalmoscopes. A related system for correction of aberrations is known from US 2017/302498 A1.

AO has been also employed for beam-shaping applications in laser micro-fabrication techniques. The wavefront modulator as the core adaptive element within all AO systems is actively configured to compensate for optical aberrations, i.e. to generate a specific phase change resulting in a desired output wavefront. Therefore it is often the characteristics of this element that define the limits of the capabilities of the AO system in terms of amplitude, spatial resolution, and fidelity of the aberration correction, which all have an effect on the overall optical system performance.

The term "amplitude" may be understood here as referring to the amplitude of a specific fundamental mode (hence amplitude may be understood as "mode amplitude"). In other words, it is not related to the intensity of light but rather to the phase of the wavefront described in terms of the fundamental modes. For example, the local strokes or deflection of a modulator, such as local deformations of a mirror or a transparent membrane produced by a certain number of actuator elements, will produce a distribution of local phase shifts and a corresponding overall wavefront deformation. This wavefront deformation can then be analyzed in terms of fundamental modes, and the amplitude of each of the modes can be determined. Therefore, the higher the mode amplitude delivered by a modulator, the higher the amount of overall phase shift provided by the modulator will be. Moreover, a larger mode amplitude will typically require a larger stroke / deflection of the modulator.

There are several classes of wavefront/phase modulators developed for this technology, such as liquid crystal spatial light modulators, deformable mirrors, and their refractive alternative such as deformable phase plates (DPPs). In all of these cases, modulators developed for high amplitude modulation are typically limited by the spatial resolution (order) of the correction, and those developed for high order aberration correction, which typically requires a large number of actuation elements, are limited by the amplitude. The term "higher order" may be understood here as describing modes defined by cubic polynomials or greater (n≥3), in particular by polynomials of second degree, for example with radial order greater than 2 (n>2). Such polynomials may be characterized in that they feature at least 2 points of inflection.

Furthermore, it is possible to combine two different modulators, one optimized for high-amplitude and low-order correction and another one for low-amplitude and high-order correction. This configuration is usually referred to as woofer-tweeter and there are several successful implementations of it within ground-based telescopes, laser micro-fabrication, and ophthalmology. In such configurations one modulator modulates a certain number of wavefront modes, while the other modulator will modulate the remaining modes. In other words, the modes used for correcting the wavefront are separated on the basis of their respective order and are modulated by one of the modulators only.

As soon as having more than one modulator in the AO-system, either with similar or distinctive properties, there are increasing problems with respect to their control.

It is therefore an object of the present invention to provide an improved control method allowing fast and reliable operation of a multitude of serially cascaded wavefront modulators in real-time.

According to claim 1, a method is provided, which solves the afore-mentioned task. In particular the invention proposes a method as introduced at the beginning, which, in addition, is characterized in that control signals cᵢ are simultaneously applied to the respective modulators to jointly generate the output wavefront Zₒ and wherein at least one of the N modes is a shared (or "common") mode that is jointly modulated by at least two of the modulators.

The modes modulated by a respective modulator may be a subset of the N fundamental modes and also the sum of all modes modulated by the multitude of modulators may be a subset of the N fundamental modes.

It is important to note here that although the control signals cᵢ are simultaneously applied, at least one of the control signals, in particular a first control signal c₁, is calculated independently from the other control signals. This approach allows optimal driving of each of the multiple modulators, as each control signal can be optimized individually for the respective modulator. Optimization in this context refers to optimization of the control signals cᵢ, which will define the driving voltages that are to be applied to a particular modulator. In addition, the control signals may be calculated without any feedback, based on an open-loop approach.

"Serially cascaded" may be understood here in that the modulators share a common optical axis or path and/or are arranged along that axis/path. "Configured to modulate m of the N modes" may be understood here such that the respective modulator offers a required number of actuator elements for tuning the respective m modes. In the simplest case, the modulator may be formed, for example, by a tunable lens that can only modulate defocus and/or spherical aberration. In other words, the number of modes tuned/modulated by a single one of the modulators may be as low as one. Preferably, however, at least one of the modulators is configured to modulate higher order modes (n≥2).

Each of the wavefront modulators may thus offer a number of actuator elements for producing a desired output wavefront. These actuator elements can be electrodes for electrostatic actuation or piezoelectric actuators, for example.

In the following, the term "the modulators" may refer to the "multitude of wavefront modulators" to be operated in a serially cascaded optical configuration and "multitude of modulators" may mean here that at least two modulators belong to that cascade.

Joint modulation of a certain mode X may be understood here, as a situation wherein at least two of the modulators of the cascade contribute to the modulation of this specific mode X.

Modulating a mode may be understood here as influencing this mode by adding amplitude to this particular mode. Sharing the modulation of at least one "common/shared mode", preferably of at least two common/shared modes, among multiple modulators is beneficial for boosting the overall amplitude and fidelity of wavefront correction or modulation that the AO system can deliver with respect to that/these particular mode(s). At the same time, the method allows fast operation of the modulators in real time, as all modulators are activated / modulate the wavefront simultaneously.

As will be explained in greater detail below, for increasing the accuracy of control, it is preferable if an empirically-constructed response model is used at least for one of the modulators to estimate its respective response Zᵢₛ as an intermediate step for calculating the subsequent control signal cᵢ₊₁. Such a model can include variations of the response occurring from modulator to modulator that arise, for example, from fabrication tolerances. The proposed control method may thus use empirically-constructed response models of each modulator to simulate/estimate their respective response as an intermediate step for calculating subsequent control signals cᵢ₊₁ to be finally applied to the respective modulator. For best performance of the individual modulators, the respective control signals may be calculated using a convex optimal control problem (OCP). This problem may consider boundary conditions of the actuation elements employed in the respective modulator through inequality constrains.

Using such response models for simulating the response of each of the modulators can result in a highly accurate estimation of the best response of the actuator for producing the desired target wavefront. Such an optimal response may be achieved in real-time and without relying on additional hardware such as wavefront sensors.

The wavefront modulators may be of the refractive or reflective type, i.e. they may be operated in transmission or reflection. It is also possible to use the control method for mixed configurations in which refractive and reflective wavefront modulators are serially cascaded. Preferably, the cascade of modulators may comprise at least two refractive wavefront modulators. This is because refractive modulators can be closely stacked, thus resulting in a compact design. The N fundamental orthonormal modes may be Zernike polynomials or other suitable functions of different order (for example n=1 to n=4). In adaptive optics (AO) use cases, these modes may be aberration modes and the target wavefront may be a wavefront to be generated to compensate for aberrations. The target wavefront may be likewise modeled as a superposition of the N fundamental orthonormal modes. For those skilled in the art, it is obvious that representing a wavefront by a finite number of N orthonormal modes will always remain an approximation of the true shape of that wavefront. In practical use cases, the output wavefront may still show a residual error with respect to the target wavefront.

The method according to the invention comprises the following features: a first control signal c₁ for controlling a first one of the wavefront modulators is calculated from a target wavefront Zₜ; a response Z₁ₛ of the first wavefront modulator to the first control signal c₁ is estimated and subtracted from the target wavefront Zₜ to yield a first residual wavefront Z_{R1}; a second control signal c₂ for controlling a second of the wavefront modulators is calculated from the residual wavefront Z_{R}, and the control signals c₁, c₂ are simultaneously applied to the respective modulators to jointly generate the output wavefront Zₒ.

Importantly, the first control signal c₁ is calculated independently of the second control signal c₂. In addition, as the modulator chosen as the "first modulator" may change from time to time, in fact all of the control signals cᵢ may be independently calculated from each other in an upstream-comparison of their respective responses, which will be described in more detail below.

Moreover, although the control signals c₁, c₂ are simultaneously applied to the respective modulators, they are calculated sequentially (first c₁, than c₂). For example, an optimization algorithm used for calculating the control signals cᵢ may be sequential in the sense that a specific control signal cᵢ of the i^{th} modulator may be computed based on the residuals Z_{rs,i-1} of the response Z_{s,i-1} of the (i-1)^{th} modulator, which itself is based on a similar optimization of the control signal cᵢ₋₁. The optimization method to compute control signal cᵢ may, however, not reach back to cᵢ₋₁ but only to the residual Z_{rs,i-1}. In other words, the calculation of the second control signal c₂ will depend on the result of the estimation of the response Z₁ₛ of the first wavefront modulator.

This method allows control of the multitude of modulators just like a single adaptive optical element within a larger optical system, in particular as part of an imaging system, which simplifies the control of the multitude of modulators. As the control signals (c₁, c₂, ... cₖ) are simultaneously applied to the respective modulators, the methods belong to the group of simultaneous control methods.

As an example, the second modulator may be operated to modulate modes up to the 2^{nd} order (n ≤ 2), while a first one of the modulators may be operated to modulate higher order modes (n ≥ 3) and 2^{nd} order modes. In this case the common mode may be a 2^{nd} order mode (n=2), for example astigmatism or defocus. Generally speaking, all or part of the remaining modulators (which are all modulators except the first modulator) may be used as "complementary modulators" for increasing the range and improving the fidelity of the modulation performed by the first modulator.

When using the proposed control method, one modulator may thus complement the performance of at least one other modulator by increasing its correction range and improving the correction fidelity. This may be achieved by compensating for an estimated residual wavefront and/or by correcting for unwanted modes induced by the first modulator. Such compensation is particularly efficient, if the modulators share common modes which they can modulate individually and independently from another.

Response may be understood here as a specific output wavefront produced by the respective wavefront modulator, for example Zₒ₁ being the output wavefront of the first modulator. The final output wavefront Zₒ may be understood as a superposition of (real) wavefronts Zₒ₁ and Zₒ₂ produced by the first and second modulator respectively, and the estimated/simulated wavefronts Zₛᵢ will only approximate the real wavefronts Zₒᵢ. Importantly, the simulated response of the first modulator is used as input for calculating a suitable control signal c₂ for the second modulator. However, this calculation of c₂ is done before applying the control signals c₁ and c₂ simultaneously.

The second modulator will typically be the modulator that follows the first modulator in the direction of light propagation through the cascade of modulators. However, this is not mandatory, i.e. the second modulator can also be arranged in front of the first modulator. In other words, any of the modulators in the cascade can be operated as the "first modulator".

The target wavefront may be a desired output wavefront, for example in case the cascade of wavefront modulators are employed for beam shaping.

When the wavefront modulators are employed for real-time aberration correction, for example to achieve diffraction limited imaging, the target wavefront may be linked to a desired phase function used for compensating a distortion of a wavefront used for the imaging. In this case, the target wavefront may be based on aberrations occurring in the imaging system or a sample optically investigated by the imaging system.

According to a specific embodiment, the target wavefront may be obtained through a sensorless wavefront estimation algorithm based on captured image data. This may be done using a modal decomposition technique or based on an algorithm implementing some sort of artificial intelligence and/or machine learning.

Importantly, the presented method is not limited to controlling only two modulators. Rather it can be easily extended for simultaneously operating a higher number of modulators: In this case, the wavefront outputted by the 2^{nd} modulator can be estimated as Z₂ₛ and substracted from the first residual wavefront Z_{R1} (which was obtained by subtracting the estimated response Z₁ₛ of the first wavefront modulator to the first control signal from the initial target wavefront Zₜ), thus yielding a second residual wavefront Z_{R2}. Next, a further control signal c₃ for controlling a third of the multitude of wavefront modulators can be calculated from the residual second wavefront Z_{R2}. This process of estimating responses of individual modulators and calculating residual wavefronts to be used as an input for calculating control signals of a consecutive modulator of the cascade can be repeated up until the last modulator in the cascade of modulators. Finally, all control signals obtained can be applied simultaneously in one step to the respective modulators to produce the desired output wavefront Zₒ, which may be understood as a superposition of the actual output wavefront Zₒᵢ of each one of the modulators. It is obvious that cascading more and more modulators will be beneficial for reducing the residual error between the final output wavefront Zₒ and the initial target wavefront Zₜ.

In some applications, at least two of the multitude of modulators may be configured to tune the same set of m of the N modes. In the simplest case, there may be only two modulators sharing a common actuator arrangement and each modulating all N modes. In this case, all N modes are shared/common modes.

It is also possible that at least two of the multitude of modulators may be configured to tune different sets of modes, for example m₁ of the N modes and m₂ of the N modes, respectively.

Alternatively or additionally, the method introduced at the very beginning can be designed / enhanced according to the invention with the following feature: at least two of the modulators may share a common arrangement of actuation elements and may show an identical orientation such that each modulator is configured to modulate the same m modes of the output wavefront Zₒ. In this case, these at least two modulators sharing a common arrangement may be operated simultaneously using a common control signal c, which is calculated from a target wavefront Zₜ. This calculation may be based on the approximative assumption that all of these at least two modulators contribute in equal terms to the output wavefront Zₒ.

"Identical orientation" may be understood here such that corresponding actuator elements of the modulators may be aligned to each other with respect to the optical axis of the cascade of modulators. As a result of this relative spatial alignment, providing a common signal to corresponding actuator elements will produce (approximately) identical mode modulation by each of the modulators operated/driven with the common control signal c.

Preferably, the common control signal c may be delivered by a single electronic driving unit (modulator driver), and even more preferably, empirically-constructed response models of each of the at least two modulators may be used to estimate their respective response as an preceding step for calculating the common control signal c.

In a particular embodiment, all of the modulators of the cascade may share a common arrangement of actuation elements and may show an identical orientation. In this case each modulator may be configured to modulate all N modes of the output wavefront Zₒ. Again, in this case, all modulators may be driven by a common control signal c, as explained above.

According to another advantageous embodiment, the cascade may comprise k modulators of which k-1 modulators share a common arrangement of actuation elements and show an identical orientation such that each of these k-1 modulators is configured to modulate m modes of the output wavefront Zₒ. These k-1 modulators can then be operated with a single electronic driving unit (modulator driver 1). The cascade may further comprise a k^{th} modulator driven by a separate driving unit (modulator driver 2). The k^{th} modulator, which may be operated with a separate control signal c₂, can then be used to compensate for unwanted wavefront errors introduced by the k-1 modulators operated simultaneously using a common control signal c₁. The advantages of this approach are: the k-1 modulators modulate jointly thus increasing the amplitude available for correction, while only requiring a single driving unit/ one common control signal c₁. On the other hand, the additional k^{th} modulator compensates for wavefront errors resulting from the joint operation of the k-1 modulators.

There exist further advantageous embodiments solving the aforementioned problem, which are defined by the sub-claims and explained in the following: As already explained, at least one of the N modes may be a "shared mode" or "common mode" which is jointly modulated by at least two of the modulators. In particular, this may mean that the shared mode is modulated by one of the at least two modulators and by at least one other of the at least two modulators. Thus, in the example of a cascade of three modulators, only two of them may share a common mode; it is also possible that there are at least two shared modes, which are individually shared/modulated by at least two of the multitude of modulators.

As a result of using jointly modulated common modes, an amplitude used for modulating the shared mode may be distributed among at least two of the modulators. In other words, the second modulator may add amplitude and/or fidelity to the output wavefront Zₒ with respect to a shared mode that is also modulated by the first modulator. In particular applications, it can be preferable, if higher-order modes (e.g. mode order n ≥ 3 or for example n >4) are modulated by a single modulator only. In other words, the shared mode(s) may be (a) lower-order mode(s) (n ≤ 2).

Different from state-of-the art approaches where different modes are strictly assigned to different modulators but not shared among modulators, there is hence no strict decomposition of aberration modes between individual of the modulators. Rather, modulators of the cascade may jointly modulate at least one, preferably at least two, of the N modes. In consequence, there may be an overlap of modes mₖᵢ modulated by the first and second of the k modulators such that m₁ᵢ = m₂ᵢ. In other words, the sum of the number of modes modulated by all k modulators of the cascade may be larger than N.

As a result, the second modulator may add amplitude and fidelity to the output wavefront Zo with respect to a mode already modulated, but with some residual error, by the first modulator. The advantage of this approach is that the total amplitude available for modulating a certain mode can be distributed among at least two of the modulators of the cascade, thus increasing the amplitude range available for wavefront/phase modulation. At the same time higher order (n≥2 or for example n>4) modes, which typically have less amplitude (and therefore also less physical stroke of the modulator may be required) but higher numbers of (small sized) actuation elements to achieve sufficient spatial resolution of the modulation, may be modulated by only one of the modulators, i.e. these modes may not be shared among the modulators.

The control signals and the actuator elements of the at least two of the modulators may thus be configured such that all of these at least two modulators modulate at least one of the N modes of the output jointly.

In summary, it is suggested to employ a space of M ≥ 1 shared modes, preferably at least two shared modes (M ≥ 2), which can each be modulated by at least two of the multitude of modulators, in particular by all of the modulators. This approach extends the amplitude range and fidelity of the wavefront modulation with respect to these M shared modes.

The control signals cᵢ may be calculated in an open-loop calculation scheme, in particular without any feedback and/or without relying on a wavefront sensor.

In addition, it is preferable to use separate influence matrices Bᵢ empirically constructed for each of the modulators. This way, optimum control signals cᵢ can be calculated independently for each of the modulators, based on the separate/individual influence matrices Bᵢ. This approach is different from using a common influence matrix in that the control signals applied to the individual modulators no longer depend on each other. By contrast, the separate influence matrices Bᵢ proposed here may be characterized in that the matrix coefficients of these matrices Bᵢ only describe the influence of actuator elements of a single modulator on the wavefront modes modulated by this particular modulator. Hence, such a separate influence matrix does not include the influence of actuator elements from another modulator on a specific wavefront mode.

The respective response Zᵢₛ of each of the modulators may thus be estimated using a respective influence matrix Bᵢ that transforms the respective control signal cᵢ into a specific amplitude vector aᵢ. This vector aᵢ may comprise coefficients, for example Zernike coefficients, which define the response Zᵢₛ of the respective modulator in terms of the fundamental modes. Hence, each of the modulators may be controlled using a separate influence matrix Bᵢ and a separate amplitude vector aᵢ.

Each column of such a separate influence matrix Bᵢ may be a vector representing the empirically measured influence of individual actuation elements of a respective modulator onto the various coefficients of vector a. For example, an element bₖₗ of the matrix Bᵢ may be equal to the slope of a linear function relating the k^{th} coefficient of vector a to the control signal component cᵢₗ applied to the l^{th} actuation element of the i^{th} modulator. A separate influence matrix Bᵢ thus gathers the effects of all individual actuation elements of a single modulator affecting a specific coefficient / component of vector a and thus a specific fundamental mode modulated by that modulator.

In greater detail, each column of a respective influence matrix Bᵢ may be a vector representing influence functions, which have been empirically measured for individual actuator elements or sets of such elements of the respective modulator. Hence, the estimated responses Zᵢₛ of each of the modulators may include individual variations of the modulator response, in particular due to fabrication tolerances. In conclusion, each influence matrix Bᵢ may be based on a number of respective optical calibration measurements performed with the respective modulator.

The calculation of at least one of the control signals cᵢ, preferably of each control signal cᵢ, can be done, in principal using a matrix multiplication, for example using a singular value decomposition (SVD) approach. However, preferably such calculations may be (individually) performed based on an optimal control problem (OCP) that is solved with an optimization approach. This approach is advantageous in particular if at least one of the modulators is based on electrostatic actuation. When using such a control scheme, it is preferable for fast control if the control signals cᵢ are each calculated as a vector containing L control signal components cᵢ₁ .. c_{iL} for driving L respective actuator elements of the respective modulator. The OCP may then be solved, preferably, by searching for a global optimum of the control vector representing a global minimum in residual wavefront error. This may include solving linear and non-linear inequality conditions. Such a solution may be found using an interior-point algorithm, for example, or other optimization methods such as augmented Langrangian method, active set method or trust region method. Since such optimization methods lead to a relatively low computational load, they allow real-time and simultaneous control of the complete cascade of modulators.

The optimization algorithm employed for solving the OCP may preferably be convex. Moreover, this algorithm may consider physical and practical boundary constraints of the actuator elements employed in the respective modulator. This approach ensures that the obtained solution results in best performance of each modulator.

In summary, the behavior of each modulator to a specific control signal cᵢ, which can be described by the estimated response Zᵢₛ, may thus be accurately estimated using a specific response model characterizing the respective modulator and by employing optimal control signals calculated using a convex optimization algorithm.

The methods detailed above are especially applicable to a situation, wherein one of the modulators, in particular said first modulator, is configured to modulate not more than two of the N modes, in particular it may be configured to modulate only a single mode. This modulator may thus be a tunable optical component such as a tunable lens, a tunable mirror, a tunable prism or a tunable phase plate, to name a few. In such a situation, the remaining other modulator/modulators of the multitude of modulators may be used for compensating aberrations, which are introduced by said optical component, in particular during tuning of that component. The aberrations introduced by the tunable optical component may thus comprise static aberrations and/or dynamic aberrations and the latter may vary with the tuning of the tunable optical component.

According to another advantageous embodiment, at least one of the control signals cᵢ, in particular the second control signal c₂, may be calculated, additionally or exclusively, based on input that is independent from the target wavefront Zₜ. In other words, at least one of the control signals cᵢ may be exclusively based on this input or it may be derived (at least indirectly) from the target wavefront while also taking into account additional input independent of the target wavefront.

For example, such input may provide information on or be related to aberrations introduced by one of the modulators, in particular said optical component and/or said first modulator. In this case, the modulator whose control signal is based on this input, in particular said second modulator, can compensate aberrations introduced by another said component/said first modulator. The latter may be producing a modulation based on the target wavefront. Such input, which may be regarded as a priori knowledge, may be obtained empirically through optical characterization measurements or it may be based on a real-time measurement of aberrations being introduced by said component / first modulator. One convenient way of providing such input is to use a look-up table that provides information on the introduced aberrations, in particular as a function of tuning/modulation of that particular modulator / optical component.

Alternatively or additionally, such input can be related to environmental changes affecting the modulation of at least one of the modulators. Such changes may occur in temperature, humidity, air pressure, or in the gravity impact due to a change of orientation of the modulator. As a result, such input allows compensation of aberrations resulting from environmental changes or of a drift of a modulator's response due to environmental changes.

According to one embodiment, the first control signal c₁ may be calculated with the aim of minimizing a particular residual wavefront Z_{Ri}, for example the first residual wavefront Z_{R1}. In the latter case, this approach will minimize the remaining wavefront error by driving the first modulator to a maximum modulation required for a certain target wavefront and/or minimize the respective responses Zᵢₛ of all subsequent modulators in the cascade. This may be useful in particular, when the first modulator modulates fewer modes than the second modulator and/or is designed for modulating lower order aberrations/modes (n<3) at relatively high amplitudes.

Alternatively, the first control signal c₁ may be calculated with the aim of minimizing the respective responses Zᵢₛ of all of the wavefront modulators of the cascade. In this case, the total modulation response of the cascade of modulators will be distributed more evenly among the modulators. This may be done in particular such that the individual amplitudes (and hence individual physical strokes/deflections) of all the wavefront modulators are minimized. Such an approach may be useful in particular if modulators are used that share a common arrangement of actuator elements.

In yet another alternative, the first control signal c₁ may be calculated with the aim of minimizing a respective response Zi of one of the wavefront modulators of the cascade.

Another important issue can be to choose, which one of the multitude of modulators should be the first modulator whose estimated response Z₁ₛ is used to compute the first residual wavefront Z_{R1}. The first modulator may be chosen based on an upstream-comparison of at least two different estimated responses Zᵢₛ of the modulators. This approach guarantees that the best suited modulator is chosen for the modulation required at a specific point in time. Upstream may be understood here in the sense that this comparison may be done prior to calculation of the final control signals to be applied simultaneously to the modulators. In this comparison, each control signal cᵢ, which is needed for estimated responses Zᵢₛ of the modulators, may be calculated independently of all other control signals.

For example, the control signals cᵢ of the modulators used in the upstream-comparison can be initially calculated based on the target wavefront Zₜ only, i.e. independent of the other control signals. The respective resulting residual wavefronts Z_{R} may be calculated based on the respective estimated responses Zᵢₛ. Finally, the modulator producing the smallest residual wavefront Z_{R} may be chosen as the first modulator. The remaining control signals may then be calculated based on this smallest residual wavefront Z_{R}. In other words, the modulator producing the lowest modulation error may be chosen as the first modulator defining the first residual wavefront Z_{R1}, which then defines the control signals applied to the other modulators.

For solving the problem underlying this invention, there is also proposed an optical assembly of a multitude of wavefront modulators arranged serially into a cascade to jointly generate a desired output wavefront Zₒ. This assembly is characterized in that the assembly comprises a control system configured to implement a method, as described previously or as defined by one of the claims directed towards a method, for operating the multitude of modulators.

In accordance with the present invention, there is also provided a control system for solving the afore-mentioned problem. This control system is designed for controlling a multitude of k serially cascaded wavefront modulators, which are jointly generating an output wavefront Zₒ. The system comprises a computational unit for computing control signals cᵢ, in particular from a target wavefront Zₜ and/or other input, for estimating respective responses Zᵢₛ of individual of the k modulators to respective of the control signals cᵢ and a control unit for delivering k control signals cᵢ to the k modulators. The system is further characterized in that the computational unit and the control unit are configured to implement a method as described previously or according to one of the claims directed towards a method.

The control unit may be implemented for example as an electronic modulator driver that converts digital input received from the computation unit into analogue control signals, in particular analogue control voltages, for driving the individual actuator elements of a respective modulator.

Finally, for solving the afore-mentioned problem, an imaging system is proposed which may be in the form of a light microscope. This imaging system comprises a multitude of wavefront modulators arranged in a serial configuration and jointly generating a modulated output wavefront Zₒ and a control system for controlling the modulators. The control system is configured to implement a method, as described previously or as defined by one of the claims directed towards a method, for operating the multitude of modulators.

The wavefront modulation provided by the modulators can be employed both in a detection and/or in an illumination path of the imaging system/the microscope. In other words, the modulators may be arranged such that they are modulating a wavefront propagating along a detection path and/or a wavefront propagating along an illumination path of the system. For example, the imaging system can comprise two separate cascades of modulators, one in an illumination path the other in a detection path, and each cascade may be individually operated according to a method as presented herein.

As explained previously, for achieving a compact optical design of the system, it is also preferable if at least one of the modulators is of the transmissive type. For microscopic applications, using at least two transmissive modulators, in particular when closely stacked, can be highly beneficial.

In such an imaging system, in particular in a light microscope, one of the modulators of the multitude of serially cascaded wavefront modulators, in particular used as a "first modulator", may be positioned at a pupil plane of the imaging system or at a conjugate of the pupil plane or at a conjugate of an aberrating layer, e.g. a layer optically investigated with the imaging system and introducing optical aberrations. If the modulators are placed at optically conjugated planes they can produce a coupled effect on the total output wavefront modulation.

Preferably, a second modulator of the multitude of modulators may then be positioned within a short distance of the first modulator, for example a distance that is less than two times of a diameter of an optical aperture of the first modulator; alternatively, the second modulator may be positioned at a second plane conjugated to the pupil plane or a second conjugate of another aberrating layer. Such positioning is well-suited for correcting aberrations introduced in an object plane (for example by a biological sample) that is visualized with the imaging system.

Preferably, the imaging system may comprise interstitial relay optics for resizing beams and/or repositioning of optical planes that are affected by the modulation of a modulator.

Finally a target wavefront on which the control of the modulators is based may be obtained through a sensorless wavefront estimation algorithm, in particular based on captured image data. Hence, the optical system does not necessarily require a wavefront sensor for accurate wavefront modulation and/or dynamic aberration correction.

Preferred embodiments of the present invention shall now be described in more detail, although the present invention is not limited to these embodiments: further embodiments of the present invention may be obtained by combining features of one or more of the patent claims with each other and/or with one or more features of an embodiment described or illustrated herein.

With reference to the accompanying drawings, where features with corresponding technical function are referenced with same numerals even when these features differ in shape or design:
- Fig. 1: shows an imaging system according to the invention,
- Fig. 2: shows another imaging system according to the invention,
- Fig. 3: shows yet another imaging system according to the invention,
- Fig. 4: illustrates a known sequential control method,
- Fig. 5: illustrates a known simultaneous control method based on decomposition of aberration modes,
- Fig. 6: illustrates another known simultaneous control method based on a universal control matrix,
- Fig. 7: illustrates a possible implementation of a control method according to the invention,
- Fig. 8: depicts a graph illustrating the joint correction of two common modes m2 and m3 by two individual modulators,
- Fig. 9: shows a serial cascade of k modulators operated with a method according to the invention,
- Fig. 10: shows another possible implementation of a method according to the invention,
- Fig. 11: shows the generalized concept of the implementation according to figure 10,
- Fig. 12: shows an implementation of the method in which a modulator is compensating aberrations introduced by a tunable lens,
- Fig. 13: gives an overview of Zernike polynomials p(m,n) of different radial order n and azimuthal frequency m,
- Fig. 14: shows a light microscope configured according to the invention, and
- Fig. 15: shows another light microscope configured according to the invention.

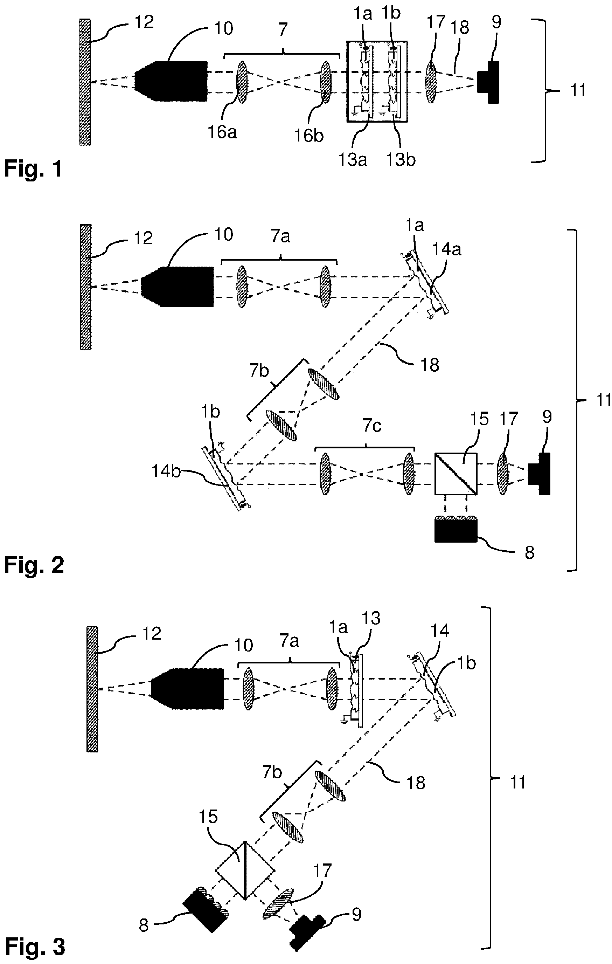

Figure 1 depicts a first imaging system 11 according to the invention: an object 12 is inspected with an objective 10 forming an image that is relayed using two telescope lenses 16 arranged as a telescopic relay optic 7. The detection path of the system 11 further includes two closely stacked deformable phase plates (DPPs) 13a, 13b, and finally a tube lens 17 or camera lens 17 that is forming a real image of the object 12 on an image sensor 9. The DPPs 13a, 13b are operated as a multitude of serially cascaded refractive wavefront modulators 1a, 1b, using a control method according to the invention. The modulators 1a, 1b are jointly generating an output wavefront Zₒ that is delivered to the tube lens 17 and their duty is to correct for imaging aberrations occurring in the detection path of the imaging system 11.

Figure 2 depicts another imaging system 11 according to the invention. Compared to the system 11 of Figure 1, the system 11 of Figure 2 employs two reflective type modulators 1a, 1b in the form of deformable mirrors (DM) 14a, 14b for correcting the aberrations. As visible, the optical axis defining the detection path of the system 11 is folded two times and the wavefront transmitted through the system 11 is measured using a wavefront sensor 8 that is reading out a beam splitter 15. Moreover, a total of three relay optics 7a, 7b, 7c are used.

In the configuration of Figure 3, which illustrates another optical system 11 according to the invention, there is one transmissive type modulator 1a and one reflective type modulator 1b which are cascaded along the optical axis of the system. Due to the mix of reflective modulator 1b and refractive modulator 1a, the optical path is folded only once.

All three systems 11 of Figures 1 to 3 also comprise a control system implementing a control method for controlling the two cascaded modulators 1a, 1b according to the invention, which is not shown in the Figures for simplicity.

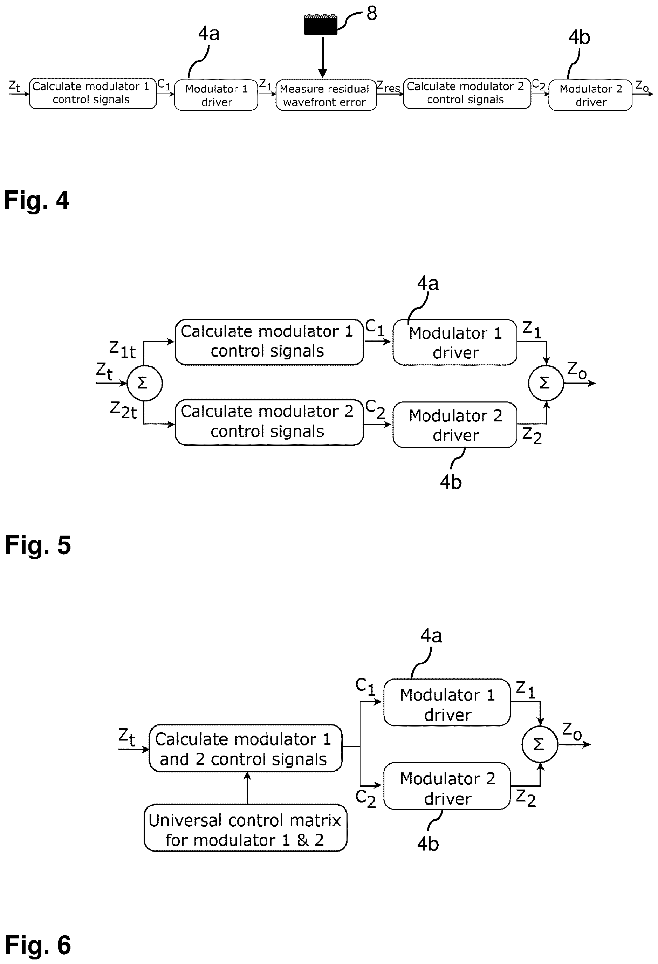

Figure 4 schematically illustrates a known sequential method for controlling a multitude of serially cascaded modulators. Initially a first modulator is driven using a "modulator driver 1" based on a calculated control signal and then, using a wavefront sensor, the residual wavefront error produced by this first modulator is measured. Based on this measurement, the second modulator is then driven with a second "modulator driver 2" for compensating the residual aberrations. The control signals delivered to the individual modulators are independently and sequentially calculated from each other and the modulators are driven sequentially, not simultaneously. Sequential methods most often require a wavefront sensor, have to be done in closed loop, and are not suitable for real-time applications with fast changing aberrations, because of the time lag produced by the sequential operation. Furthermore, the requirement of a wavefront sensor makes them unsuitable for sensorless configurations which are highly relevant for microscopy applications.

Simultaneous methods can be differentiated into two different approaches, which are illustrated in Figure 5 and 6, respectively: The first approach, outlined in Figure 5, is to decompose the aberration modes and to assign them separately to different modulators used for correction. For this purpose, orthonormal aberration modes can be considered and the duties of each modulator are thus completely separated. As illustrated in Figure 5, the calculation of the control signals cᵢ is done in parallel, i.e. simultaneously, and the control signals cᵢ are finally applied simultaneously to the individual modulators. This approach can have suboptimal performance due to a lack of a common space between the correction modes and therefore modulators cannot have complementary performance for increasing the amplitude and fidelity of the aberration modes.

The second approach for simultaneous control of a multitude of cascaded modulators, outlined in Figure 6, is mathematically constructing a single universal influence matrix from the influence matrices of each of the modulators. Using the universal influence matrix, this approach resembles having a single modulator within the system. In particular, the control signals cᵢ are calculated simultaneously and applied simultaneously. Due to the existing optical couplings and crosstalk between the modulators, as a direct result of using an universal influence matrix, this method can result in suboptimal control performance. In particular, due to the use of an universal influence matrix, the control signals delivered to the individual modulators are no longer independent from each other, thus complicating the calculation of optimal control signals.

In addition, requiring multiple drivers for driving an increasing number of modulators is very expensive and therefore a prohibitive factor in many applications.

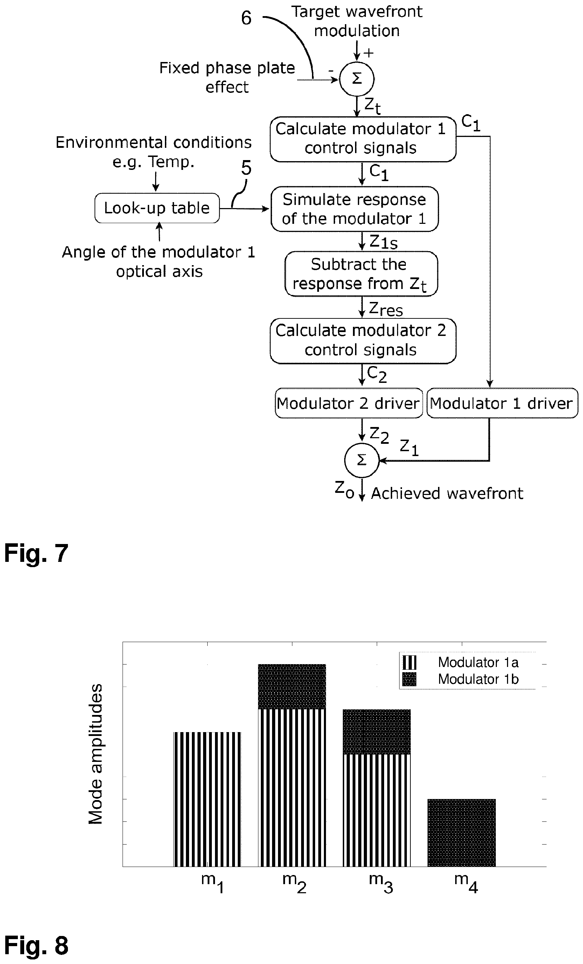

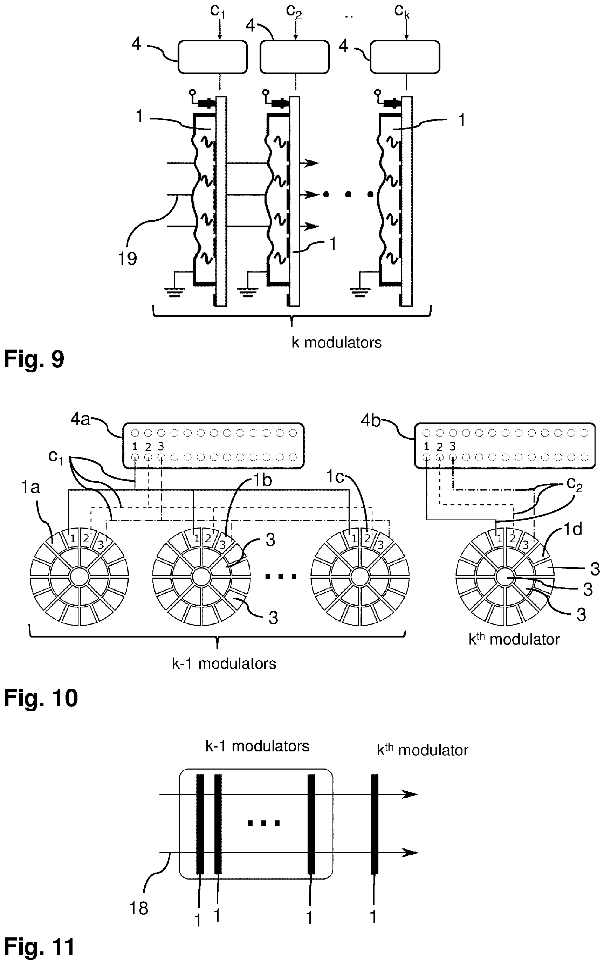

Figure 7 depicts a flow chart for describing one possible implementation of a method according to the invention for controlling a multitude of 2 serially cascaded wavefront modulators 1a, 1b, for example arranged as shown in Figure 1, 2 or 3. This method can, however, be easily extended to the control of k serially cascaded modulators, for example as shown in Figure 9, and is applicable to both reflective and refractive wavefront modulators. Moreover, the modulators 1 controlled by the method may have different arrangements of actuator elements 3 and/or may be designed / optimized for correcting different aberration modes. However, the method shown in Figure 7 is characterized in that the illustrated separate control signals c₁ and c₂ are simultaneously applied to the respective modulators 1a, 1b to jointly generate a desired output wavefront Zₒ. The task to be solved by the control method is that the output wavefront Zo should match a target wavefront Zₜ as close as possible. To achieve this goal, at least one of the N fundamental orthonormal modes describing Zo can be a shared mode that is jointly modulated by the two modulators 1a, 1b.

As a first step, illustrated at the top of Figure 7, the first control signal c₁ for controlling a first one (e.g. modulator 1a in Figure 1) of the wavefront modulators 1a, 1b is calculated from a target wavefront Zₜ. In this calculation, a constant phase modulation 6 added to Zₒ by an optical component such as a fixed phase plate, may be considered. Next, a response Z₁ₛ of the first wavefront modulator 1a to the first control signal c₁ is estimated and subtracted from the target wavefront Zₜ to yield a first residual wavefront Z_{R1}. From Z_{R1}, a second control signal c₂ for controlling a second of the wavefront modulators (e.g. modulator 1b in Figure 1) can then be calculated. As a last step, the control signals c₁, c₂ are simultaneously applied to the respective modulators (1a, 1b) to jointly generate the output wavefront Zₒ. It is already obvious from this example, that c₁ is calculated independently of c₂, as c₁ only depends on Zₜ and - in this particular example - on the constant phase added by said (non-tunable) component. Moreover, the algorithm used for calculating c₂ does not consider the control signal c₁, i.e. the algorithm used for calculating the individual control signals is free of a feedback loop (open-loop approach).

Although the control signals c₁, c₂ are simultaneously applied, they are not calculated simultaneously but sequentially, as illustrated by the flow chart of Figure 7.

As illustrated by the specific example of Figure 7, the control signals cᵢ may be calculated in an open-loop calculation scheme, without any feedback and without relying on a wavefront sensor. This is because the target wavefront Zₜ may be the result of a sensorless wavefront estimation algorithm that is taking into account image data captured by an imaging sensor 9, as illustrated in the example of Figure 1 (which does not show a wavefront sensor 8 as in Figures 2 and 3) .

Another optional feature is illustrated in Figure 7, namely to consider additional input 5, which is independent from Zₜ, for the calculation of a control signal, here of c₂. Such input 5 may be related to aberrations introduced by one of the modulators and/or to environmental changes affecting the modulation of one of the modulators 1. Such input 5 can be considered, for example using a look-up table, in the estimation or simulation of the response of one of the modulators, for example the response of the first modulator, as depicted in Figure 7.

In the example of Figure 7, the wavefront modulation response of the first modulator is estimated based on an empirically-constructed response model that is characterizing this particular modulator and this simulated response then serves as an intermediate result for calculating the final control signal c₂, since the residual wavefront Z_{R1} is a direct function of the simulated response Z₁ₛ. The control method may thus rely on estimating the behavior of each modulator based on its empirically constructed response model, which can be obtained by optical characterization measurements.

In the example of Figure 1, the situation is as follows: each modulator 1a, 1b is characterized with an empirical response model that describes the wavefront output Zₒᵢ of the respective modulator 1a, 1b with a total number of 150 fundamental modes.

This high number of modes is also used for modeling the target wavefront Zₜ and the final output wavefront Zₒ jointly produced by the modulators. Modulator 1a is configured to modulate 15 modes (m₁=15), including all lower-order modes, whereas modulator 1b is configured to modulate the same 15 modes plus 21 higher order-modes, so a total of 31 modes (m₂=36). Since the response models include all of these modes, as well as even further modes, the response of each of the modulators 1a, 1b can be accurately predicted using the respective response model. Hence, both modulators 1a, 1b modulate 15 shared modes (including high order modes, from n = 3 to n = 4), with the second modulator 1b modulating another 21 higher order-modes. The task of the latter is (i) to improve fidelity and/or increase the amplitude of the 15 modes modulated by modulator 1a, and (ii) to modulate the 21 remaining high order modes.

The method illustrated by Figure 7 may also takes advantage of an optimization-based computational unit as part of a control system for calculating the control signals cᵢ of each modulator. This unit may implement the calculation of at least one of the control signals cᵢ using an optimal control problem (OCP) that is solved with an optimization approach.

As illustrated by the flow chart of figure 7, Zₒ can be understood as resulting from a superposition of the individual output wavefronts Zₒ₁ and Zₒ₂ generated by each modulator 1a and 1b, respectively. This superposition is further illustrated in Figure 8, which shows the share of total mode amplitude each of the two modulators (described as modulator 1 and 2 in the graph) is contributing to the total output wavefront Zₒ in terms of four fundamental modes m1, m2, m3 and m4. As visible in the graph, modes m2 and m3 are shared modes, because their respective amplitude is distributed among modulators 1a and 1b. In other words, the second modulator 1b adds amplitude and therefore also improves the fidelity to the output wavefront Zₒ with respect to the shared modes m2 and m3, which are also modulated by the first modulator 1a. At the same time, mode m1 is only modulated by modulator 1a, while mode m4 is only modulated by modulator 1b. Hence, the modulators 1a, 1b are also designed for modulating different ones of the fundamental modes, namely m1 and m4.

In an arrangement of k modulators, as shown in Figure 9, there can be a pairwise overlap of modes modulated by the modulators 1. For example, a first and second modulator 1a, 1b may share a first common mode and the second modulator 1b may share another common mode with a third modulator 1c of the cascade. However, as visible in the example of Figure 9, the control signals cᵢ will be applied simultaneously to the individual modulators in one single step, after each control signal cᵢ has been accurately calculated.

Figure 10 illustrates another possible control method according to the invention, intended for the particular case of driving k-1 phase modulators (in the example k-1 = 3) which share a common arrangement of actuator elements 3 (three of them are denoted with numbers 1, 2, 3 in Figure 10) and can thus be driven with a single modulator driver 4a. Such a configuration is aimed for increasing the amplitude of the aberration correction. For this purpose, the three modulators 1a, 1b, 1c share a common set of modes, which they modulate jointly. To allow this using a single driver, the multiple modulators 1a, 1b, 1c are cascaded serially with the same orientation, such that they can all modulate the same m modes using their respective actuation electrodes 3. In the depicted case of having multiple modulators with L actuation electrodes 3, one driver 4a with L channels (three of which have been denoted as 1, 2, and 3 in Figure 10) is sufficient for driving all of the modulators 1a, 1b, 1c simultaneously, using a common control signal c₁ which may have L signal components c₁ᵢ. The control algorithm can be thus similar to having a single modulator. The concept shown in the figure 10 depicts an embodiment of employing refractive modulators but the same concept can be applied to reflective modulators by aligning the modulators such that those electrodes connected to the same channel of the driver influence the same light field positions.

Figure 10 furthermore illustrates another advantageous embodiment, in which a k^{th} modulator is added to the cascade of k-1 modulators sharing a common arrangement of actuation elements 3. This approach is more schematically shown in Figure 11. As explained, the k-1 modulators can be operated with a single electronic driving unit 4a and the k^{th} modulator may be driven independently by a separate driving unit 4b. In other words, the k^{th} modulator may be operated with a separate control signal c₂. Such an arrangement has the advantage that the k^{th} modulator can now be used to compensate for unwanted wavefront errors introduced by the k-1 modulators operated simultaneously using the common control signal c₁. While the k-1 modulators modulate jointly and thus increase the amplitude available for correction, the additional k^{th} modulator may compensate for wavefront errors resulting from the joint operation of the k-1 modulators, and thus further improves the fidelity of wavefront modulation. These wavefront errors may be obtained from an estimation of the total response of the k-1 modulators.

If the modulators used in the cascade have a common arrangement of actuation elements 3, it does not matter to start with which one. If they are different, however, for example when each is optimized for modulating a different set of modes, starting with the wrong modulator can result in different control signals. In the latter case, the best modulator should be chosen as the starting point, which will depend on the target wavefront to be modulated. This target wavefront or modulation can be used to initially calculate the control signals cᵢ for the modulators. Next, using their response model, the quality of their modulation can be evaluated. The modulator with the lower modulation error can be then chosen as the "first modulator" and the remaining modulators as complementary modulators for increasing the range and improving the fidelity of the "first modulator". For example, in the case of Figure 1, either modulator 1a or 1b may be chosen as the "first modulator", depending on the modulation to be performed.

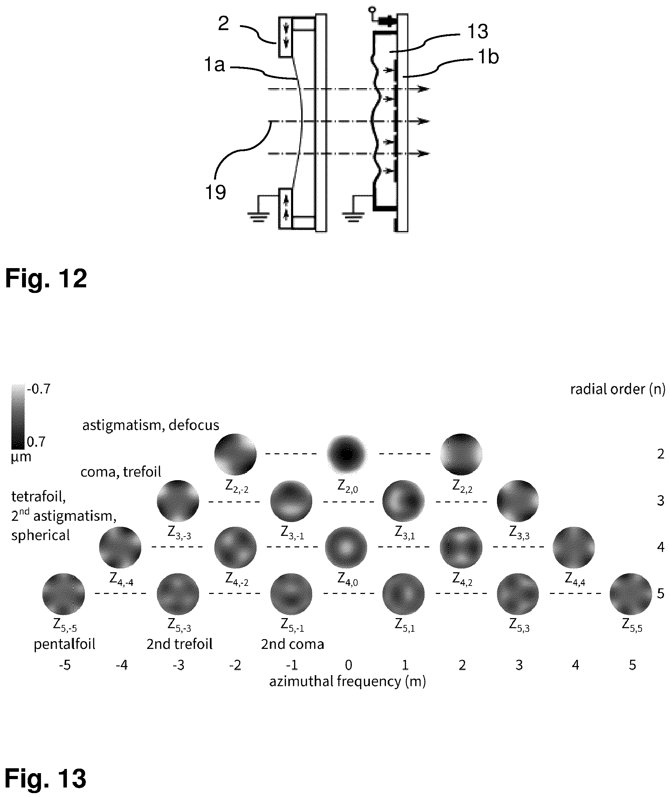

Figure 12 illustrates another possible use case of a control method according to the invention. Here, the first modulator 1a is formed by a tunable lens 2, which can only modulate defocus (Z_{2,0} in Zernike notation - cf. Figure 13). The 2^{nd} modulator 1b, which is formed by a deformable phase plate (DPP) 13 can not only tune defocus but also higher order modes. Hence, the DPP 13 can actively compensate for higher order aberrations introduced by the tunable lens. At the same time, the DPP 13 can provide fine tuning of the overall defocus provided by the cascade of both modulators 1a, 1b.

Figure 13 depicts several lower order (radial order n ≤2) and higher order (radial order n ≤ 3) fundamental modes in the form of Zernike polynomials Z_{n,m}. As can be imagined, for accurate modulation, at least one of the multitude of modulators operated with a method according to the invention may be designed mainly for lower-order correction, while at least one other of these modulators may be optimized for higher order aberration. By providing an overlap of common modes, for example an overlap of astigmatism Z_{2,-2} or Z_{2,2}, the modulation with respect to this particular mode can be split up among different modulators, and their superimposed responses can boost the modulation of this particular mode.

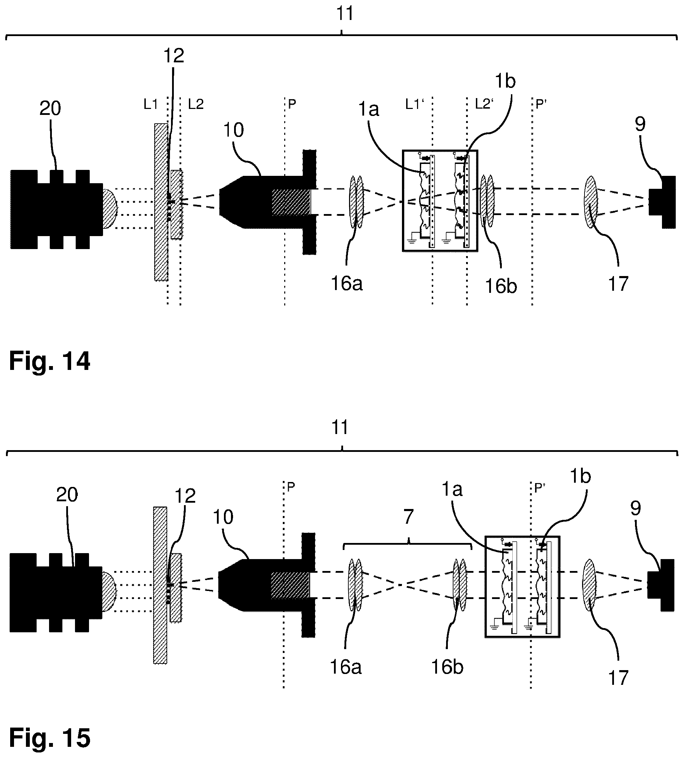

Figure 14 and 15 finally illustrate two possible examples of imaging systems 11 in the form of light microscopes according to the invention, each one featuring a high NA microscope objective 10 for high resolution imaging of a sample 12, sandwiched between transparent microscope slides. Again, the accompanying control systems are not shown, in particular the required modulator drivers are not visible. Each system 11 comprises at least two serially cascaded wavefront modulators 1a, 1b jointly generating a modulated output wavefront Zₒ that is propagating along the respective detection path. The target wavefront required for the control of the modulators is obtained in both systems 11 through a sensorless wavefront estimation algorithm, as the microscopes do not feature a wavefront sensor 8.

In the example of Figure 14, the imaging system 11 implements a multi-conjugate-adaptive-optics (MCAO) system: modulator 1a is placed at a first plane L1' that is conjugated to a layer L1 within the sample 12. The second modulator 1b is placed at a second plane L2' conjugated to another layer L2 within the sample 12. Through this arrangement, each of the modulators can compensate optical aberrations which are produced in the respective aberrating layer L1, L2, i.e. the locations of modulators 1a, 1b are conjugated, respectively, to the aberrating layers L1 and L2, which the modulators 1a, 1b are meant to correct separately. Hence, in an imaging system 11 according to the invention, modulators 1a, 1b of the cascade may be used to separately correct aberrating layers L1, L2 located at different depths along the optical axis of the system 11.

In the example of Figure 15, the imaging system 11 implements a pupil-plane-adaptive-optics (PPAO) system: the second modulator 1b is placed at a plane P' that is conjugated to the pupil P of the objective 10 defining the numerical aperture (NA) of the objective 10. The first modulator 1a is placed in close vicinity to plane P'. In fact, for accurate aberration control, it is preferable if the distance between the two modulators 1a, 1b is less than two times of a diameter of an optical aperture of the first modulator 1a. The transfer of the pupil P onto the modulator 1b is accomplished using the relay optics 7, which is formed as a telescope comprising two doublets 16a, 16b.

As visible from a comparison of Figures 14 and 15, in the upper example the modulators 1a, 1b, are placed between the two lenses 16a, 16b, forming the relay optic 7, i.e. within diverging beams of the detection path of the microscope, allowing them to correct aberrations produced in layers L1 and L2 separately. In the lower example of Figure 15, the modulators 1a, 1b are placed in a portion of the detection path in which the light is collimated by the relay optic 7. As the modulators 1a and 1b are placed in a portion of the detection path that is near the conjugate P' to the pupil plane P of the imaging objective 10, the modulators 1a, 1b correct for the cumulative aberrations on the entire field of view (FoV). In both systems 11 according to Figures 14 and 15, the modulators 1a, 1b can be operated with a simultaneous control method as explained herein.

To summarize, the control methods proposed herein are simultaneous methods and can be done in real-time making them suitable for correction of dynamically fast changing aberrations. The methods can be open-loop, do not require a wavefront sensor and can thus be used together with sensorless aberration estimation algorithms. Using the proposed method, it is possible to have a common space of M shared modes which are jointly modulated by at least two of the multitude of modulators. This approach results in extending the amplitude range and fidelity of the aberration correction. Employing an optimization-based control strategy for calculating the control signals of each modulator is advantageous for fast and accurate best-mode control of each modulator. The optimization algorithm used can be convex, and can consider physical and practical boundary constraints. As a result, the obtained solution for an individual control signal cᵢ may guarantee optimal performance of each modulator. The behavior of each modulator can be estimated using their respective response model and by employing the optimal control signals calculated using a convex optimization algorithm. The method proposed here is not limited to only two modulators but can be extended for driving a higher number of modulators. The method is particularly suited for driving multiple deformable phase plates (DPPs) arranged in a cascaded configuration.

In conclusion, a novel simple and efficient method is proposed for control of a multitude of wavefront modulators 1a, 1b sharing a common optical axis 19. The method enables real-time correction of dynamic, fast changing aberrations by providing independent control signals cᵢ for controlling the individual modulators 1a, 1b simultaneously. By sharing modes among the modulators 1a, 1b, it is possible to increase the available amplitude and fidelity of the wavefront modulation. At the same time, independent calculation of the control signals cᵢ ensures individual best-performance of each modulator 1 and high total modulation fidelity (c.f. Figure 9).

### List of reference numerals

- 1: wavefront modulator
- 2: tunable lens
- 3: actuator element
- 4: modulator driver
- 5: input
- 6: constant wavefront modulation (introduced by additional non-tunable optical component)
- 7: relay optics
- 8: wavefront sensor
- 9: image sensor
- 10: microscope objective
- 11: imaging system
- 12: object / sample (to be investigated with 11)
- 13: deformable phase plate (DPP)
- 14: deformable mirror (DM)
- 15: beam splitter
- 16: telescope lens
- 17: tube lens / camera lens
- 18: beam path
- 19: optical axis
- 20: light source

## Claims

1. **Method for operating a multitude of serially cascaded wavefront modulators (1a**, **1b)**,
- which are arranged within a beam path (18) and are jointly generating an output wavefront Zₒ that is modeled as a superposition of N fundamental orthonormal modes, and
- wherein each of the wavefront modulators (1a, 1b) is configured to modulate a number of mᵢ of the N modes of the output wavefront Zₒ,
**characterized in that**
- a first control signal c₁ for controlling a first one (1a) of the wavefront modulators is calculated from a target wavefront Zₜ and independently of a second control signal c₂ for controlling a second (1b) of the wavefront modulators,
- a response Z₁ₛ of the first wavefront modulator (1a) to the first control signal c₁ is estimated and subtracted from the target wavefront Zₜ to yield a first residual wavefront Z_{R1},
- the second control signal c₂ is calculated from the residual wavefront Z_{R1}, and
- the control signals c₁, c₂ are simultaneously applied to the respective modulators (1a, 1b) to jointly generate the output wavefront Zₒ.

2. Method according to claim 1,
- wherein the control signals cᵢ are simultaneously applied to the respective modulators (1a, 1b) to jointly generate the output wavefront Zo and
- wherein at least one of the N modes is a shared mode that is jointly modulated by at least two of the modulators (1a, 1b, 1c).

3. Method according to claim 1 or claim 2,
- wherein at least two of the modulators (1a, 1b) share a common arrangement of actuation elements (3) and show an identical orientation such that each of these at least two modulators (1a, 1b) is configured to modulate the same m modes of the output wavefront Zₒ,
- and wherein all of the at least two modulators (1a, 1b) are operated simultaneously using a common control signal c, which is calculated from a target wavefront Zₜ.

4. Method according to one of the preceding claims,
- wherein empirically-constructed response models of each modulator (1a/1b) are used to estimate their respective response Zᵢₛ as an intermediate step for calculating the subsequent control signals cᵢ₊₁.

5. Method according to one of the preceding claims,
- wherein the shared mode is modulated by one of the at least two modulators (1a) and by at least one other of the at least two modulators (1b) and/or
- wherein an amplitude used for modulating the shared mode is distributed among at least two of the modulators (1a, 1b),
and/or
- wherein the second modulator (1b) adds amplitude and/or improves fidelity to the output wavefront Zₒ with respect to a shared mode also modulated by the first modulator (1a),
- preferably wherein modes of higher order (n>2) are modulated by a single modulator (1b) only.

6. Method according to one of the preceding claims,
- wherein the control signals cᵢ are calculated in an open-loop calculation scheme, in particular without any feedback and/or without relying on a wavefront sensor (8),
- preferably using separate influence matrices Bᵢ empirically constructed for each of the modulators (1a/1b).

7. Method according to one of the preceding claims,
- wherein the respective response Zᵢₛ of each of the modulators (1a, 1b) is estimated using a respective influence matrix Bᵢ that transforms the respective control signal cᵢ into a specific amplitude vector aᵢ comprising coefficients, which define the response Zᵢₛ of the respective modulator (1a/1b) in terms of the fundamental modes,
- in particular such that each of the modulators (1a, 1b) is controlled using a separate influence matrix Bᵢ and a separate amplitude vector aᵢ.

8. Method according to one of the preceding claims,
- wherein each column of a respective influence matrix Bᵢ is a vector representing influence functions, which have been empirically measured for individual actuator elements (3) of the respective modulator (1a/1b),
- in particular such that the estimated responses Zᵢₛ of each of the modulators (1a/1b) include individual variations of a modulator response, in particular due to fabrication tolerances, and/or
- such that each influence matrix Bᵢ is based on a number of respective optical calibration measurements performed with the respective modulator (1a/1b).

9. Method according to one of the preceding claims,
- wherein the calculation of at least one of the control signals cᵢ is performed based on an optimal control problem (OCP) that is solved with an optimization approach,
- preferably wherein the control signals cᵢ are each calculated as a vector containing L control signal components for driving L respective actuator elements (3) of the respective modulator (1a/1b),
- in particular wherein the OCP is solved by searching for a global optimum of the vector representing a global minimum in residual wavefront error.

10. Method according to one of the preceding claims,
- wherein one of the modulators (1a) is configured to modulate not more than two of the N modes, in particular wherein this modulator (1a) is a tunable optical component (2) such as a tunable lens, a tunable mirror, a tunable prism or a tunable phase plate,
- preferably wherein the other modulator(s) (1b) of the multitude of modulators (1a, 1b) is/are used for compensating aberrations introduced by said optical component (2).

11. Method according to one of the preceding claims,
- wherein at least one of the control signals cᵢ, in particular the second control signal c₂, is calculated, additionally or exclusively, from input (5) that is independent from the target wavefront Zₜ,
- preferably wherein the input (5) is related to aberrations introduced by one of the modulators (1a) and/or to environmental changes affecting the modulation of one of the modulators (1a / 1b).

12. Method according to one of the preceding claims,
- wherein the first control signal c₁ is calculated with the aim of minimizing the first residual wavefront Z_{R1},
- preferably wherein the first modulator (1a) modulates fewer modes than the second modulator (1b),
or
- wherein the first control signal c₁ is calculated with the aim of minimizing the respective responses Zᵢₛ of all of the wavefront modulators (1a, 1b),
- in particular such that the individual amplitudes aᵢᵢ of all the wavefront modulators (1a, 1b) are minimized.

13. Method according to one of the preceding claims,
- wherein the first modulator (1a/1b) whose estimated response Z₁ₛ is used to compute the first residual wavefront Z_{R1} is chosen based on an upstream-comparison of at least two different estimated responses Zᵢₛ of the modulators (1a, 1b),
- preferably wherein the control signals cᵢ of the modulators (1a, 1b) used in the comparison are initially calculated based on the target wavefront Zₜ, the respective resulting residual wavefront Z_{R} are calculated based on the respective estimated responses Zᵢₛ, and the modulator (1a/1b) producing the smallest residual wavefront Z_{R} is finally chosen as the first modulator.

14. **Control system** for controlling a multitude of k serially cascaded wavefront modulators (1a, 1b), which are arranged within a beam path (18) and are jointly generating an output wavefront Zₒ, the system comprising
- the k serially cascaded wavefront modulators (1a, 1b),
- a computational unit for computing control signals cᵢ and for estimating respective responses Zᵢₛ of individual of the k modulators to respective of the control signals cᵢ and
- a control unit for delivering k control signals cᵢ to the k modulators, and
- wherein the computational unit and the control unit are configured to implement a method according to one of the preceding claims by
- calculating a first control signal c₁ for controlling a first one (1a) of the wavefront modulators from a target wavefront Zₜ and independently of a second control signal c₂ for controlling a second (1b) of the wavefront modulators.

15. **Imaging system** (11), in particular a light microscope, comprising
- a multitude of wavefront modulators (1a, 1b) arranged in a serial configuration and jointly generating a modulated output wavefront Zₒ and
- a control system for controlling the modulators (1a, 1b), the control system being configured to implement a method according to one of the claims 1 - 13,
- in particular wherein the modulators (1a, 1b) are modulating a wavefront propagating along a detection path and/or a wavefront propagating along an illumination path,
- preferably wherein at least one, preferably, at least two of the modulators (1a, 1b) are of transmissive type, and/or
- wherein a target wavefront Zₜ on which the control of the modulators is based is obtained through a sensorless wavefront estimation algorithm, in particular based on captured image data, and/or
- wherein one of the modulators (1b) is placed at a pupil plane P of the imaging system or at a conjugate P' of the pupil plane or at a conjugate L' of an aberrating layer L.

## Patentansprüche

1. Verfahren zum Betreiben einer Vielzahl von seriell kaskadierten Wellenfrontmodulatoren (1a, 1b),
- die innerhalb eines Strahlengangs (18) angeordnet sind und gemeinsam eine Ausgabewellenfront Zₒ erzeugen, die als Überlagerung von N orthonormalen Grundmoden modelliert ist, und
- wobei jeder der Wellenfrontmodulatoren (1a, 1b) dafür ausgelegt ist, eine Anzahl von mᵢ der N Moden der Ausgabewellenfront Zₒ zu modulieren,
**dadurch gekennzeichnet, dass**
- ein erstes Steuersignal c₁ zum Steuern eines ersten (1a) der Wellenfrontmodulatoren aus einer Zielwellenfront Zₜ und unabhängig von einem zweiten Steuersignal c₂ zum Steuern eines zweiten (1b) der Wellenfrontmodulatoren berechnet wird,
- eine Antwort Z₁ₛ des ersten Wellenfrontmodulators (1a) auf das erste Steuersignal c₁ geschätzt und von der Zielwellenfront Zₜ zum Erhalten einer ersten Restwellenfront Z_{R1} subtrahiert wird,
- das zweite Steuersignal c₂ aus der Restwellenfront Z_{R1} berechnet wird, und
- die Steuersignale c₁, c₂ gleichzeitig an die jeweiligen Modulatoren (1a, 1b) zum gemeinsamen Erzeugen der Ausgabewellenfront Zₒ angelegt werden.

2. Verfahren nach Anspruch 1,
- wobei die Steuersignale cᵢ gleichzeitig an die jeweiligen Modulatoren (1a, 1b) zum gemeinsamen Erzeugen der Ausgabewellenfront Zₒ angelegt werden, und
- wobei mindestens eine der N Moden eine gemeinsame Mode ist, die von mindestens zwei der Modulatoren (1a, 1b, 1c) gemeinsam moduliert wird.

3. Verfahren nach Anspruch 1 oder Anspruch 2,
- wobei mindestens zwei der Modulatoren (1a, 1b) eine gemeinsame Anordnung von Aktuatorelementen (3) haben und eine identische Ausrichtung aufweisen, derart, dass jeder dieser mindestens zwei Modulatoren (1a, 1b) dafür ausgelegt ist, die gleichen m Moden der Ausgabewellenfront Zₒ zu modulieren,
- und wobei alle der mindestens zwei Modulatoren (1a, 1b) gleichzeitig unter Verwendung eines gemeinsamen Steuersignals c betrieben werden, das aus einer Zielwellenfront Zₜ berechnet wird.

4. Verfahren nach einem der vorhergehenden Ansprüche,
- wobei empirisch erstellte Antwortmodelle jedes Modulators (1a/1b) verwendet werden, um die jeweilige Antwort Zᵢₛ des jeweiligen Modulators (1a/1b) zu schätzen, und zwar als Zwischenschritt bei der Berechnung der nachfolgenden Steuersignale cᵢ₊₁.

5. Verfahren nach einem der vorhergehenden Ansprüche,
- wobei die gemeinsame Mode durch einen der mindestens zwei Modulatoren (1a) und durch mindestens einen anderen der mindestens zwei Modulatoren (1b) moduliert wird, und/oder
- wobei eine zum Modulieren der gemeinsamen Mode verwendete Amplitude auf mindestens zwei der Modulatoren (1a, 1b) verteilt wird,
und/oder
- wobei der zweite Modulator (1b) der Ausgabewellenfront Zₒ eine zusätzliche Amplitude hinzufügt und/oder die Wiedergabetreue in Bezug auf eine gemeinsame Mode verbessert, die ebenfalls durch den ersten Modulator (1a) moduliert wird,
- wobei vorzugsweise Moden höherer Ordnung (n>2) nur von einem einzigen Modulator (1b) moduliert werden.

6. Verfahren nach einem der vorhergehenden Ansprüche,
- wobei die Steuersignale cᵢ in einem offenen Berechnungsschema berechnet werden, insbesondere ohne jegliche Rückkopplung und/oder ohne sich auf einen Wellenfrontsensor (8) zu stützen,
- vorzugsweise unter Verwendung separater Einflussmatrizen Bᵢ, die empirisch für jeden der Modulatoren (1a/1b) erstellt werden.

7. Verfahren nach einem der vorhergehenden Ansprüche,
- wobei die jeweilige Antwort Zᵢₛ jedes der Modulatoren (1a, 1b) unter Verwendung einer jeweiligen Einflussmatrix Bᵢ geschätzt wird, die das jeweilige Steuersignal cᵢ in einen spezifischen Amplitudenvektor aᵢ transformiert, der Koeffizienten umfasst, die die Antwort Zᵢₛ des jeweiligen Modulators (1a/1b) in Bezug auf die Grundmoden definieren,
- insbesondere derart, dass jeder der Modulatoren (1a, 1b) unter Verwendung einer eigenen Einflussmatrix Bᵢ und einem eigenen Amplitudenvektor aᵢ gesteuert wird.

8. Verfahren nach einem der vorhergehenden Ansprüche,
- wobei jede Spalte einer jeweiligen Einflussmatrix Bᵢ ein Vektor ist, der Einflussfunktionen darstellt, die für einzelne Aktuatorelemente (3) des jeweiligen Modulators (1a/1b) empirisch gemessen wurden,
- insbesondere derart, dass die geschätzten Antworten Zᵢₛ jedes der Modulatoren (1a/1b) individuelle Schwankungen einer Modulatorantwort beinhalten, insbesondere aufgrund von Herstellungstoleranzen, und/oder
- derart, dass jede Einflussmatrix Bᵢ auf einer Anzahl jeweiliger optischer Kalibrierungsmessungen basiert, die mit dem jeweiligen Modulator (1a/1b) durchgeführt wurden.

9. Verfahren nach einem der vorhergehenden Ansprüche,
- wobei die Berechnung mindestens eines der Steuersignale cᵢ auf der Grundlage eines Problems optimaler Steuerung, OCP, durchgeführt wird, das mit einem Optimierungsansatz gelöst wird,
- wobei die Steuersignale cᵢ vorzugsweise jeweils als ein Vektor berechnet werden, der L Steuersignalkomponenten zum Ansteuern von L jeweiligen Aktuatorelementen (3) des jeweiligen Modulators (1a/1b) enthält,
- insbesondere wobei das OCP durch die Suche nach einem globalen Optimum des Vektors gelöst wird, der ein globales Minimum des Restwellenfrontfehlers darstellt.

10. Verfahren nach einem der vorhergehenden Ansprüche,
- wobei einer der Modulatoren (1a) dafür ausgelegt ist, nicht mehr als zwei der N Moden zu modulieren, insbesondere wobei dieser Modulator (1a) eine abstimmbare optische Komponente (2) wie eine abstimmbare Linse, ein abstimmbarer Spiegel, ein abstimmbares Prisma oder eine abstimmbare Phasenplatte ist,
- wobei vorzugsweise der oder die anderen Modulatoren (1b) der Vielzahl von Modulatoren (1a, 1b) zum Kompensieren von Aberrationen verwendet werden, die durch die optische Komponente (2) eingeführt werden.

11. Verfahren nach einem der vorhergehenden Ansprüche,
- wobei mindestens eines der Steuersignale cᵢ, insbesondere das zweite Steuersignal c₂, zusätzlich oder ausschließlich aus einer von der Zielwellenfront Zₜ unabhängigen Eingabe (5) berechnet wird,
- vorzugsweise wobei die Eingabe (5) mit den von einem der Modulatoren (1a) eingeführten Aberrationen und/oder mit Umgebungsänderungen zusammenhängt, die die Modulation eines der Modulatoren (1a/1b) beeinflussen.

12. Verfahren nach einem der vorhergehenden Ansprüche,
- wobei das erste Steuersignal c₁ mit dem Ziel berechnet wird, die erste Restwellenfront Z_{R1} zu minimieren,
- vorzugsweise wobei der erste Modulator (1a) weniger Moden moduliert als der zweite Modulator (1b), oder
- wobei das erste Steuersignal c₁ mit dem Ziel berechnet wird, die jeweiligen Antworten Zᵢₛ aller Wellenfrontmodulatoren (1a, 1b) zu minimieren,
- insbesondere derart, dass die einzelnen Amplituden aᵢᵢ aller Wellenfrontmodulatoren (1a, 1b) minimiert werden.

13. Verfahren nach einem der vorhergehenden Ansprüche,
- wobei der erste Modulator (1a/1b), dessen geschätzte Antwort Z₁ₛ zum Berechnen der ersten Restwellenfront Z_{R1} verwendet wird, auf der Grundlage eines stromaufwärts gerichteten Vergleichs von mindestens zwei verschiedenen geschätzten Antworten Zᵢₛ der Modulatoren (1a, 1b) ausgewählt wird,
- vorzugsweise wobei die Steuersignale cᵢ der Modulatoren (1a, 1b), die im Vergleich verwendet werden, anfänglich auf der Grundlage der Zielwellenfront Zₜ berechnet werden, die jeweilige resultierende Restwellenfront Z_{R} auf der Grundlage der jeweiligen geschätzten Antworten Zᵢₛ berechnet wird, und der Modulator (1a/1b), der die kleinste Restwellenfront Z_{R} erzeugt, schließlich als der erste Modulator ausgewählt wird.

14. Steuersystem zum Steuern einer Vielzahl von k seriell kaskadierten Wellenfrontmodulatoren (1a, 1b), die in einem Strahlengang (18) angeordnet sind und gemeinsam eine Ausgabewellenfront Zₒ erzeugen, wobei das System folgende Elemente umfasst:
- die k seriell kaskadierten Wellenfrontmodulatoren (1a, 1b),
- eine Recheneinheit zum Berechnen von Steuersignalen cᵢ und zum Schätzen von jeweiligen Antworten Zᵢₛ von einzelnen der k Modulatoren auf jeweilige der Steuersignale cᵢ, und
- eine Steuereinheit zum Ausgeben von k Steuersignalen cᵢ an die k Modulatoren, und
- wobei die Recheneinheit und die Steuereinheit dafür ausgelegt sind, ein Verfahren nach einem der vorhergehenden Ansprüche zu implementieren, indem sie
- ein erstes Steuersignal c₁ zum Steuern eines ersten (1a) der Wellenfrontmodulatoren aus einer Zielwellenfront Zₜ und unabhängig von einem zweiten Steuersignal c₂ zum Steuern eines zweiten (1b) der Wellenfrontmodulatoren berechnen.

15. Bildgebungssystem (11), insbesondere ein Lichtmikroskop, umfassend:
- eine Vielzahl von Wellenfrontmodulatoren (1a, 1b), die in einer seriellen Auslegung angeordnet sind und gemeinsam eine modulierte Ausgabewellenfront Zₒ erzeugen, und
- ein Steuersystem zum Steuern der Modulatoren (1a, 1b), wobei das Steuersystem dafür ausgelegt ist, ein Verfahren nach einem der Ansprüche 1 bis 13 zu implementieren,
- insbesondere wobei die Modulatoren (1a, 1b) eine Wellenfront, die sich entlang eines Erfassungspfades ausbreitet, und/oder eine Wellenfront, die sich entlang eines Beleuchtungspfades ausbreitet, modulieren,
- vorzugsweise wobei mindestens einer, vorzugsweise mindestens zwei der Modulatoren (1a, 1b) von transmissiver Art sind, und/oder
- wobei eine Zielwellenfront Zₜ, auf der die Steuerung der Modulatoren basiert, durch einen sensorlosen Wellenfrontschätzalgorithmus erhalten wird, insbesondere auf der Grundlage von erfassten Bilddaten, und/oder
- wobei einer der Modulatoren (1b) in einer Pupillenebene P des Bildgebungssystems oder in einer Konjugierten P' der Pupillenebene oder in einer Konjugierten L' einer aberrierenden Schicht L angeordnet ist.

## Revendications

1. Procédé pour faire fonctionner une multitude de modulateurs de front d'onde en cascade en série (1a, 1b),
- qui sont agencés dans un trajet de faisceau (18) et génèrent conjointement un front d'onde de sortie Zₒ qui est modélisé sous la forme d'une superposition de N modes orthonormés fondamentaux, et
- dans lequel chacun des modulateurs de front d'onde (1a, 1b) est configuré pour moduler un nombre mᵢ des N modes du front d'onde de sortie Zₒ, **caractérisé en ce que**
- un premier signal de commande c₁ pour commander un premier (1a) des modulateurs de front d'onde est calculé à partir d'un front d'onde cible Zₜ et indépendamment d'un second signal de commande c₂ pour commander un deuxième (1b) des modulateurs de front d'onde,
- une réponse Z₁ₛ du premier modulateur de front d'onde (1a) au premier signal de commande c₁ est estimée et soustraite du front d'onde cible Zₜ pour donner un premier front d'onde résiduel Z_{R1},
- le second signal de commande c₂ est calculé à partir du front d'onde résiduel Z_{R1}, et
- les signaux de commande c₁, c₂ sont appliqués simultanément aux modulateurs respectifs (1a, 1b) pour générer conjointement le front d'onde de sortie Zₒ.

2. Procédé selon la revendication 1,
- dans lequel les signaux de commande cᵢ sont appliqués simultanément aux modulateurs respectifs (1a, 1b) pour générer conjointement le front d'onde de sortie Zₒ, et
- dans lequel au moins l'un des N modes est un mode partagé qui est modulé conjointement par au moins deux des modulateurs (1a, 1b, 1c).

3. Procédé selon la revendication 1 ou la revendication 2,
- dans lequel au moins deux des modulateurs (1a, 1b) partagent un agencement commun d'éléments d'actionnement (3) et présentent une orientation identique telle que chacun de ces au moins deux modulateurs (1a, 1b) est configuré pour moduler les mêmes m modes du front d'onde de sortie Zₒ,
- et dans lequel la totalité des au moins deux modulateurs (1a, 1b) sont actionnés simultanément en utilisant un signal de commande commun c, qui est calculé à partir d'un front d'onde cible Zₜ.

4. Procédé selon l'une quelconque des revendications précédentes,
- dans lequel des modèles de réponse construits empiriquement de chaque modulateur (1a/1b) sont utilisés pour estimer leur réponse respective Zᵢₛ sous la forme d'une étape intermédiaire pour calculer les signaux de commande ultérieurs cᵢ₊₁.

5. Procédé selon l'une quelconque des revendications précédentes,
- dans lequel le mode partagé est modulé par l'un des au moins deux modulateurs (1a) et par au moins un autre des au moins deux modulateurs (1b) et/ou
- dans lequel une amplitude utilisée pour moduler le mode partagé est répartie entre au moins deux des modulateurs (1a, 1b),
et/ou
- dans lequel le deuxième modulateur (1b) ajoute de l'amplitude et/ou améliore la fidélité du front d'onde de sortie Zₒ par rapport à un mode partagé également modulé par le premier modulateur (1a),
- de préférence dans lequel les modes d'ordre supérieur (n>2) sont modulés uniquement par un modulateur unique (1b).

6. Procédé selon l'une quelconque des revendications précédentes,
- dans lequel les signaux de commande cᵢ sont calculés dans un schéma de calcul en boucle ouverte, en particulier sans rétroaction et/ou sans s'appuyer sur un capteur de front d'onde (8),
- en utilisant de préférence des matrices d'influence séparées Bᵢ construites empiriquement pour chacun des modulateurs (1a/1b).

7. Procédé selon l'une des revendications précédentes,
- dans lequel la réponse respective Z de chacun des modulateurs (1a, 1b) est estimée à l'aide d'une matrice d'influence respective Bᵢ qui transforme le signal de commande respectif cᵢ en un vecteur d'amplitude spécifique aᵢ comprenant des coefficients, qui définissent la réponse Zᵢₛ du modulateur respectif (1a/1b) en termes de modes fondamentaux,
- en particulier de telle sorte que chacun des modulateurs (1a, 1b) est commandé à l'aide d'une matrice d'influence séparée Bᵢ et d'un vecteur d'amplitude séparé aᵢ.

8. Procédé selon l'une quelconque des revendications précédentes,
- dans lequel chaque colonne d'une matrice d'influence respective Bᵢ est un vecteur représentant des fonctions d'influence, qui ont été mesurées empiriquement pour des éléments d'actionneur individuels (3) du modulateur respectif (1a/1b),
- en particulier de telle sorte que les réponses estimées Z de chacun des modulateurs (1a/1b) comprennent des variations individuelles d'une réponse du modulateur, notamment en raison de tolérances de fabrication, et/ou
- de sorte que chaque matrice d'influence Bᵢ est basée sur un nombre de mesures d'étalonnage optique respectives effectuées avec le modulateur respectif (1a/1b).

9. Procédé selon l'une quelconque des revendications précédentes,
- dans lequel le calcul d'au moins l'un des signaux de commande cᵢ est effectué sur la base d'un problème de commande optimale (OCP) qui est résolu avec une approche d'optimisation,
- de préférence dans lequel les signaux de commande cᵢ sont calculés chacun sous la forme d'un vecteur contenant L composantes de signal de commande pour piloter L éléments d'actionneur respectifs (3) du modulateur respectif (1a/1b),
- en particulier dans lequel l'OCP est résolu en recherchant un optimum global du vecteur représentant un minimum global en erreur de front d'onde résiduel.

10. Procédé selon l'une quelconque des revendications précédentes,
- dans lequel l'un des modulateurs (1a) est configuré pour moduler pas plus de deux des N modes, en particulier dans lequel ce modulateur (1a) est un composant optique accordable (2) tel qu'une lentille accordable, un miroir accordable, un prisme accordable ou une lame de phase accordable,
- de préférence, dans lequel le ou les autres modulateurs (1b) de la multitude de modulateurs (1a, 1b) est/sont utilisé(s) pour compenser des aberrations introduites par ledit composant optique (2).

11. Procédé selon l'une quelconque des revendications précédentes,
- dans lequel au moins l'un des signaux de commande cᵢ, en particulier le second signal de commande c₂, est calculé, en plus ou exclusivement, à partir d'une entrée (5) indépendante du front d'onde cible Zₜ,
- de préférence dans lequel l'entrée (5) est liée à des aberrations introduites par l'un des modulateurs (1a) et/ou à des changements d'environnement affectant la modulation de l'un des modulateurs (1a/1b).

12. Procédé selon l'une quelconque des revendications précédentes,
- dans lequel le premier signal de commande c₁ est calculé dans le but de minimiser le premier front d'onde résiduel Z_{R1},
- de préférence, dans lequel le premier modulateur (1a) module moins de modes que le deuxième modulateur (1b),
ou
- dans lequel le premier signal de commande c₁ est calculé dans le but de minimiser les réponses respectives Zᵢₛ de tous les modulateurs de front d'onde (1a, 1b),
- en particulier de telle sorte que les amplitudes individuelles aᵢᵢ de tous les modulateurs de front d'onde (1a, 1b) soient minimisées.

13. Procédé selon l'une quelconque des revendications précédentes,
- dans lequel le premier modulateur (1a/1b) dont la réponse estimée Z₁ₛ est utilisée pour calculer le premier front d'onde résiduel Z_{R1} est choisi sur la base d'une comparaison en amont d'au moins deux réponses estimées différentes Zᵢₛ des modulateurs (1a, 1b),
- de préférence, dans lequel les signaux de commande cᵢ des modulateurs (1a, 1b) utilisés dans la comparaison sont initialement calculés sur la base du front d'onde cible Zₜ, le front d'onde résiduel résultant respectif Z_{R} est calculé sur la base des réponses estimées respectives Zᵢₛ, et le modulateur (1a/1b) produisant le plus petit front d'onde résiduel Z_{R} est finalement choisi comme premier modulateur.

14. Système de commande pour commander une multitude de k modulateurs de front d'onde en cascade en série (1a, 1b), qui sont agencés un trajet de faisceau (18) et génèrent conjointement un front d'onde de sortie Zₒ, le système comprenant
- les k modulateurs de front d'onde en cascade en série (1a, 1b),
- une unité de calcul pour calculer des signaux de commande cᵢ et pour estimer des réponses respectives Zᵢₛ de chacun des k modulateurs à chacun des signaux de commande cᵢ, et
- une unité de commande pour délivrer k signaux de commande cᵢ aux k modulateurs, et
- dans lequel l'unité de calcul et l'unité de commande sont configurées pour mettre en oeuvre un procédé selon l'une quelconque des revendications précédentes en
- calculant un premier signal de commande c₁ pour commander un premier (1a) des modulateurs de front d'onde à partir d'un front d'onde cible Zₜ et indépendamment un second signal de commande c₂ pour commander un second (1b) des modulateurs de front d'onde.

15. Système d'imagerie (11), en particulier un microscope optique, comprenant
- une multitude de modulateurs de front d'onde (1a, 1b) agencés dans une configuration en série et générant conjointement un front d'onde de sortie modulé Zₒ, et
- un système de commande pour commander les modulateurs (1a, 1b), le système de commande étant configuré pour mettre en oeuvre un procédé selon l'une des revendications 1 à 13,
- en particulier dans lequel les modulateurs (1a, 1b) modulent un front d'onde se propageant le long d'un trajet de détection et/ou un front d'onde se propageant le long d'un trajet d'éclairage,
- de préférence dans lequel au moins un, de préférence au moins deux des modulateurs (1a, 1b) sont de type transmissif, et/ou
- dans lequel un front d'onde cible Zₜ sur lequel est basée la commande des modulateurs, est obtenu par un algorithme d'estimation de front d'onde sans capteur, en particulier basé sur des données d'image capturées, et/ou
- dans lequel l'un des modulateurs (1b) est placé au niveau d'un plan pupillaire P du système d'imagerie ou au niveau d'un conjugué P' du plan pupillaire ou au niveau d'un conjugué L' d'une couche aberrante L.
